(19) **Europäisches Patentamt**

**European Patent Office**

**Office européen des brevets**

(11) **EP 1 229 004 B1**

(12) **EUROPEAN PATENT SPECIFICATION**

(45) Date of publication and mention
of the grant of the patent:
**14.06.2006 Bulletin 2006/24**

(51) Int Cl.:
***C03B 37/012*** (2006.01)    ***C03B 23/047*** (2006.01)

(21) Application number: **02001773.7**

(22) Date of filing: **25.01.2002**

(54) **Method of producing a quartz glass preform for optical fibers by drawing a tube**

Verfahren zur Herstellung einer Vorform aus Quarzglas für optische Fasern durch Ziehen eines Rohres

Procédé de fabrication d'une préfrome en verre de silice pour fibres optiques par l'étirage d'un tube

(84) Designated Contracting States:
**DE FR GB IT**

(30) Priority: **01.02.2001 JP 2001025163**

(43) Date of publication of application:
**07.08.2002 Bulletin 2002/32**

(73) Proprietors:
• **Heraeus Tenevo GmbH**
**63450 Hanau (DE)**
• **SHIN-ETSU QUARTZ PRODUCTS CO., LTD.**
**Shinjuku-ku,**
**Tokyo 160-0023 (JP)**

(72) Inventors:
• **Fukunaga, Yasushi**
**Chiba-shi,**
**Chiba 261-0011 (JP)**
• **Suzuki, Masanori**
**Koriyama-shi,**
**Fukushima 963-8041 (JP)**

(74) Representative: **Staudt, Armin Walter et al**
**Patentanwalt**
**Auf der Mauer 8**
**63674 Altenstadt (DE)**

(56) References cited:
**US-A- 5 970 083**

• PATENT ABSTRACTS OF JAPAN vol. 2000, no. 11, 3 January 2001 (2001-01-03) -& JP 2000 233938 A (SHIN ETSU CHEM CO LTD), 29 August 2000 (2000-08-29)
• PATENT ABSTRACTS OF JAPAN vol. 2000, no. 07, 29 September 2000 (2000-09-29) & JP 2000 095537 A (FURUKAWA ELECTRIC CO LTD:THE), 4 April 2000 (2000-04-04)
• PATENT ABSTRACTS OF JAPAN vol. 2000, no. 16, 8 May 2001 (2001-05-08) & JP 2001 019453 A (MITSUBISHI CABLE IND LTD), 23 January 2001 (2001-01-23)

**Description**

**Industrial Field of Application**

The present invention relates to a method for producing a quartz glass preform for optical fibers by heating and stretching a quartz glass cylinder having an outer diameter (D) using a heating furnace having an upper part and a lower part and being equipped with a carbon-made heating element with an inner diameter (d).

**Prior Art**

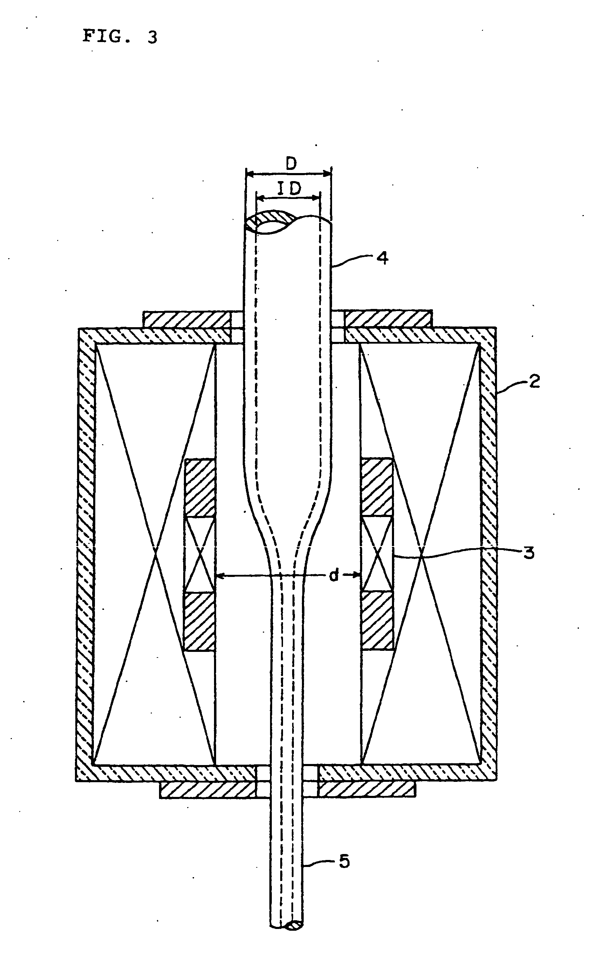

Recently, in the field of a light communication, a large amount of optical fibers have been used. In order to enlarge the application area of optical fibers, the increase of the mass production and lowering the cost thereof are inevitable. For the purpose, it is the simplest method to prepare a large high-precision quartz glass preform for optical fibers, for example, prepare a large preform for optical fibers by a rod-in-tube method, etc., and stretching and fiber drawing the preform. Hitherto, for producing a quartz glass preform for optical fibers, a large cylinder is melt-softened by a stretching apparatus as shown in Fig. 3 and the quartz glass preform has been produced by stretching the softened cylinder to a tube. However, the ellipticity of the tube obtained is large and thus optical fibers having a high quality cannot be produced.

In Japanese Patent No. 3017491 it is suggested to obtain a tube having a small ellipticity by maintaining a definite relation of the length and the inner diameter of a cylindrical heating element, which is equipped to a heating furnace and the outer diameter of a quartz glass preform, and stretching the preform in non-contact state. However, in the heating furnace described in the above-described patent, a temperature gradient occurs in the inside of the heating element which is causing an ascending air flow, resulting in a negative pressure in the lower region of the heating furnace so that outside air is sucked into the furnace.

The consequences are that the inside wall of the carbon-made heating element is corroded by oxidation.the heating element is severely consumed and thereby dust is generated by the corrosion, which attaches to the cylinder, furthermore, the temperature distribution in the peripheral direction becomes partially non uniform, and the viscosity of the softened portion of the cylinder becomes abnormal. Therefore, only a tube having a large ellipticity can be produced.

Accordingly, as shown, for example, in Japanese Patent Laid-Open No. 95537/2000, a system is proposed, which comprises blowing in an inert gas from the upper portion of a heating element, whereby the generation of an ascending air current in a heating furnace is restrained and sucking in of air and the generation of a non uniform region of temperature are prevented. However, even by stretching a large cylinder using the heating furnace, it is difficult to prepare a large quartz glass preform for optical fibers having a small ellipticity, as well as there is a restriction on the outer diameter of a quartz glass cylinder and it is difficult to produce optical fibers of a high quality at a low cost.

**Problems that the Invention is to Solve**

The object of the invention is to provide a method for producing a large quartz glass preform for optical fibers having a small ellipticity at a low cost.

**Means for Solving the Problems**

It has been found that the ellipticity of a quartz glass preform for optical fibers is largely influenced by an inert gas sucked into the heating furnace. Further investigations have shown that by setting the ratio of the outer diameter (D) of a quartz glass cylinder and the inner diameter (d) of the heating element of the heating furnace to a specific range, a large quartz glass preform for optical fibers having a small ellipticity can be produced and the present invention has been accomplished. That is, by the ratio (d/D) being in the range from 1.02 to 1.5, and blowing in an inert gas from the upper part of the heating furnace into the heating element.

Especially the present invention attaining the above-described object is a method for producing a quartz glass preform for optical fibers by stretching a large quartz glass cylinder in non-contact state using a heating furnace equipped with a carbon-made heating element, characterized by that the outer diameter (D) of the quartz glass cylinder is at least 190 mm and that the ratio (d/D) is in the range from 1.02 to 1.5, and blowing in an inert gas from the upper part of the heating furnace into the heating element.

The above-described large quartz glass cylinder is produced by vaporizing silicon tetrachloride having high purity, flame hydrolyzation in an oxyhydrogen flame, accumulating the silica glass fine particles formed around a substrate to prepare a porous soot material, forming a transparent glass in an electric furnace at a temperature of from 1400 to 2000°C to prepare a quartz glass ingot, grinding the outer diameter, forming a hole with a good precision by a core drill hole opening apparatus in conformity with the circular center of the outer diameter, and then, if necessary, carrying out a mechanical polishing, an etching treatment with hydrofluoric acid, a water-washing treatment with pure water, etc.

Also, it is preferred that the outer diameter (D) is at least 190 mm. When the outer diameter is smaller than 190 mm, there is a certain risk that a quartz glass preform for optical fibers having a large ellipticity is formed. By using such a large quartz glass cylinder, the preparation of a quartz glass preform for optical fibers having a small ellipticity becomes easy, and optical fibers having a good quality can be produced with a good productivity and at a low cost. The above-described quartz glass preform for optical fibers are a tube used for the preparation of a preform for optical fibers or a preform wherein a core rod is inserted in the inside of the quartz glass tube without being integrated with the tube.

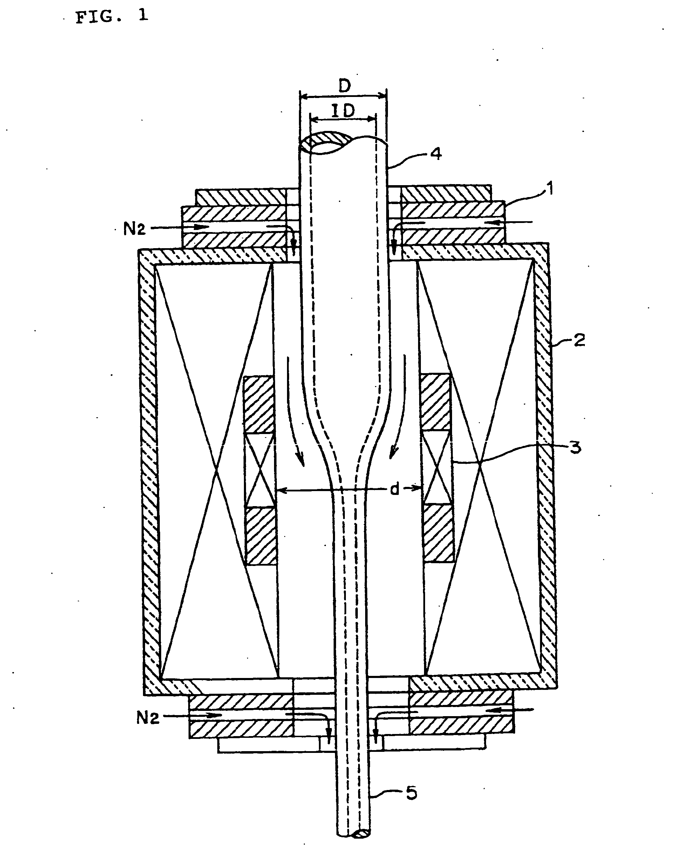

For melt-softening the above-described large quartz glass cylinder or a preform in which a core rod is inserted in said quartz glass cylinder, a heating furnace of a type is preferred comprising blowing in an inert gas from the upper portion of the heating furnace as shown in Fig. 1. By blowing in an inert gas, a negative pressure generated in the lower portion of the heating furnace is prevented, whereby the occurrence of the corrosion by oxidation of the heating element by sucking in air outside the furnace can be reduced, and the non uniform temperature difference of the peripheral surface of the quartz glass cylinder caused by the generation of dust does not occur. Particularly, in a vertical resistance furnace and in an induction furnace, stretching of a large quartz glass cylinder is easy, and the furnaces can be suitably used. The above-described resistance furnace is a furnace of heating by passing an electric current to a heating element being called heater to generate heat and in many cases, a cylindrical heater is used. Also, an induction furnace is a furnace in which by passing a high-frequency electric current, etc., near a heating element being called heater, an induction electric current is generated, whereby the heater generates heat, and in many cases, a cylindrical heater is used. As the inert gas, a nitrogen gas, an argon gas, etc., is used.

It is preferred that the ratio (d/D) of the inner diameter (d) of the heating element of the heating furnace and the quartz glass cylinder (D) is in the range from 1.02 to 1.5, and preferably in the range from 1.1 to 1.3, whereby the clearance of the inside surface of the heating element and the outside surface of the large quartz glass cylinder is in the range from 15 to 25 mm.

When the above-described ratio (d/D) is less than 1.02, non-contact heating cannot be carried out and impurities of the heating element enter the inside of the quartz glass preform for optical fibers resulting in a contamination of the optical fibers. Also, when d/D exceeds 1.5, a gradient in the concentration of the inert gas occurs and the large quartz glass cylinder or the preform in which the core rod is inserted in said quartz glass cylinder is not uniformly heated, resulting in an increased ellipticity.

At stretching described above, it is preferred to flow the inert gas through the inside of the quartz glass cylinder, and in this case, it is preferred that the ratio (D/ID) of the outer diameter (D) to the inner diameter (ID) of the quartz glass cylinder is in the range from 2 to 5. In stretching exceeding the above-described range, the quartz glass preform for optical fibers having a small ellipticity cannot be prepared.

A preferred modification of the method comprises a stretching and heating of a large quartz glass cylinder which is a hollow cylinder comprising a core rod which is co-axially inserted in said hollow cylinder without being integrated with it. In that case the ratio (D'/ID') of the outer diameter (D') to the inner diameter (ID') of the hollow cylinder is in the range < 2 to 5. In stretching exceeding the above-described range, the quartz glass preform for optical fibers having a small ellipticity cannot be prepared.

**Brief Description of the Drawings**

Figure 1    is a schematic cross sectional view of a vertical heating furnace for producing a quartz glass preform for optical fibers.

Figure 2    is a graph showing the relation between the ellipticity and the ratio of the inner diameter of the heating furnace and the outer diameter of the quartz glass cylinder.

Figure 3    is a schematic cross sectional view of a vertical heating furnace of prior art for producing quartz glass preform for optical fibers.

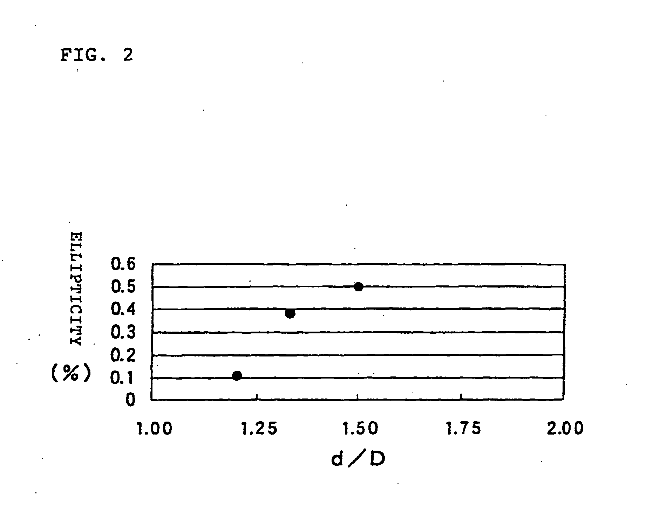

As one embodiment of the production method of the invention, a schematic cross-sectional view of the production method of the quartz glass preform for optical fibers using a vertical heating furnace is shown in Fig. 1. In Fig. 1, numeral 1 shows an inert gas supplying apparatus, 2 a heating furnace, 3 a heating element, 4 a cylinder, 5 is a tube, d is the inner diameter of the heating furnace, D is the outer diameter of the quartz glass cylinder, and ID is the inner diameter of the quartz glass cylinder. The rate of change of the ellipticity in the case of changing d/D by stretching using the above-described heating furnace is shown in Fig. 2. The ellipticity is obtained as follows. That is, the quartz glass preform for optical fibers is rotated to the circumference direction, the outer diameters of the cross-sections are continuously measured, the maximum value and the minimum value are obtained, (the maximum value - the minimum value) is shown by OV (mm), and the ellipticity (%) is calculated by the following formula (1).

$$\text{Ellipticity (\%)} = [\text{OV (mm)}/\text{OD (mm)}] \times 100 \qquad (1)$$

OD = outer diameter of the quartz glass preform for optical fibers
OV = maximum value minus minimum value

The outer diameters of the tubes produced by the production method of the invention are various, and OVs cannot be compared as they are, but by using the above-described formula 1, the ellipticity can be obtained regardless of the outer diameter of the quartz glass preforms for optical fibers.

**Mode for Carrying Out the Invention**

An embodiment of the invention is described below but the invention is not limited thereto.

**Example 1**

From a large porous soot material prepared by a VAD method by flame hydrolyzing evaporated silicon tetrachloride in an oxyhydrogen flame, a transparent glass was formed at 1600°C, and a quartz glass ingot was produced. The outer periphery of the cylindrical quartz glass ingot was ground, then the dimension thereof was measured by a laser outer diameter measuring apparatus to obtain the circular center of the outer diameter, a hole was opened by a core drill apparatus in conformity with the circular center of the outer diameter, and etching treatment with hydrofluoric acid, water-washing with pure water, and drying were carried out to obtain a quartz glass cylinder having a length of 3500 mm, an outer diameter (D) of 200 mm, and an inner diameter (ID) of 50 mm.
The above-described quartz glass cylinder was set in the vertical resistance heating furnace having a carbon-made heating element of an outer diameter of 260 mm, an inner diameter (d) of 240 mm, and a length of 290 mm as shown in
Fig. 1, the temperature of the cylindrical heater was set to 2100°C, the quartz glass cylinder was stretched to a tube of an outer diameter (D') of 90 mm. The OV of the tube obtained was 0.1 mm and according to the formula 1, the ellipticity became (0.1/90) x 100 = 0.11%. In this case, the ratio (d/D) of the outer diameter of the quartz glass cylinder and the inner diameter of the heating furnace was 1.2, and clearance of the outer diameter of the quartz glass cylinder and the inner diameter of the heating element was 20 mm.
Into the above-described tube for optical fiber a cladded core rod (outer diameter 45 mm) similarly prepared by the VAD method was inserted, thereby a preform for optical fiber was produced by a rod-in-tube method, and when the preform was drawn into a single-mode optical fiber of 125 $\mu$m, a clad ellipticity of 0.80 $\mu$m was obtained. The above-described clad ellipticity is commonly used as a standard showing the ellipticity of an optical fiber and a single-mode optical fiber having the clad ellipticity of 1% or lower is the standardized article thereof.

**Comparative Example 1**

Using a quartz glass cylinder of an outer diameter 150 mm, an inner diameter of 50 mm and a length of 3500 mm, the cylinder was stretched to a tube of an outer diameter of 60 mm by the resistance furnace as in Example 1. The OV of the tube obtained was 0.4 mm and the ellipticity was (0.4/60) x 100 = 0.67%. In this case, the ratio (d/D) of the outer diameter D of the quartz glass cylinder and the inner diameter d of the heating furnace was 1.6, and the clearance was 45 mm.
When using the above-described tube, optical fibers were prepared as in Example 1, the clad ellipticity was 1.50 $\mu$m, which did not satisfy the general standard.

**Effect of the Invention**

In the production method of the invention, a large quartz glass preform for optical fibers having a small ellipticity can be produced at a low cost, and by using the preform, a preform for optical fibers was prepared and by wire-drawing the preform for optical fibers, an optical fiber of a good quality having a small clad ellipticity can be produced with a good productivity at a low cost. Thus, the industrial value of the present invention is high.

**Description of the Reference Numbers and Signs**

| | |
|---|---|
| 1: | Apparatus for supplying inert gas |
| 2: | Heating furnace |
| 3: | Heating element |
| 4: | Quartz glass cylinder |
| 5: | Quartz glass tube |
| D: | Outer diameter of quartz glass cylinder |
| ID: | Inner diameter of quartz glass cylinder |
| d: | Inner diameter of heating furnace |

**Claims**

1. A method for producing a quartz glass preform (5) for optical fibers by heating and stretching a quartz glass cylinder (4) having an outer diameter (D) using a heating furnace (2) having an upper part and a lower part and being equipped with a carbon-made heating element (3) with an inner diameter (d), **characterized in that** the ratio (d/D) is in the range from 1.02 to 1.5, and blowing in an inert gas from the upper part of the heating furnace (2) into the heating element (3).

2. A method according to Claim 1, wherein the ratio (d/D) is in the range of from 1.1 to 1.3.

3. A method according to Claim 1, wherein the outer diameter (D) of the quartz glass cylinder (4) is at least 190 mm.

4. A method according to Claim 1, wherein the clearance between the heating element (3) and the quartz glass cylinder (4) is in the range from 15 to 25 mm.

5. A method according to Claim 1, wherein the ratio (D/ID) of the outer diameter (D) to the inner diameter (ID) of the quartz glass cylinder (4) is in the range from 2 to 5.

6. A method according to Claim 1, wherein the quartz glass cylinder (4) is a hollow cylinder (4) comprising a core rod which is co-axially inserted in said hollow cylinder (4) without being integrated with it.

7. A method according to Claim 6, wherein the ratio (D/ID) of the outer diameter (D) to the inner diameter (ID) of the quartz glass hollow cylinder (4) is in the range from less than 2 to 5.

8. A method according to Claim 1, wherein the heating furnace (2) is a resistance furnace or an induction furnace.

**Patentansprüche**

1. Verfahren zur Herstellung einer Vorform (5) aus Quarzglas für optische Fasern, durch Erhitzen und Elongieren eines einen Außendurchmesser (D) aufweisenden Quarzglaszylinders (4) unter Einsatz eines einen oberen Bereich und einen unteren Bereich aufweisenden Heizofens (2), der mit einem Heizelement (3) mit Innendurchmesser (d) ausgestattet ist, **dadurch gekennzeichnet, dass** das Verhältnis (d/D) im Bereich zwischen 1,02 bis 1,5 liegt, und dass ein Inertgas vom oberen Bereich des Heizofens (2) in das Heizelement (3) eingeblasen wird.

2. Verfahren nach Anspruch 2, **dadurch gekennzeichnet, dass** das Verhältnis (d/D) im Bereich zwischen 1,1 und 1,3 liegt.

3. Verfahren nach Anspruch 1, **dadurch gekennzeichnet, dass** der Außendurchmesser (D) des Quarzglaszylinders (4) mindestens 190 mm beträgt.

4. Verfahren nach Anspruch 1, **dadurch gekennzeichnet, dass** der Spalt zwischen dem Heizelement (3) und dem Quarzglaszylinder (4) im Bereich zwischen 15 bis 25 mm liegt.

5. Verfahren nach Anspruch 1, **dadurch gekennzeichnet, dass** das Verhältnis (D/ID) des Außendurchmessers (D) zum Innendurchmesser (ID) des Quarzglaszylinders (4) im Bereich von 2 bis 5 liegt.

6. Verfahren nach Anspruch 1, **dadurch gekennzeichnet, dass** der Quarzglaszylinder (4) ein Hohlzylinder (4) ist, der einen Kernstab umfasst, welcher koaxial in dem besagten Hohlzylinder (4) eingesetzt ist, ohne mit diesem verbunden zu sein.

7. Verfahren nach Anspruch 6, **dadurch gekennzeichnet, dass** das Verhältnis (D/ID) des Außendurchmessers (D) zum Innendurchmesser (ID) des Quarzglashohlzylinders (4) im Bereich von weniger als 2 bis 5 liegt.

8. Verfahren nach Anspruch 1, **dadurch gekennzeichnet, dass** der Heizofen (2) ein Widerstandsheizofen oder ein Induktionsofen ist.

**Revendications**

1. Procédé pour produire une préforme de verre de quartz (5) pour fibres optiques en chauffant et en étirant un cylindre de verre de quartz (4) ayant un diamètre externe (D) utilisant un four de chauffage (2) ayant une partie supérieure et une partie inférieure et étant équipé d'un élément de chauffage en carbone (3) avec un diamètre interne (d), **caractérisé en ce que** le rapport (d/D) est compris entre 1,02 et 1,5 et **caractérisé par** soufflage dans un gaz inerte depuis la part supérieure du four de chauffage (2) dans l'élément de chauffage (3).

2. Procédé selon la revendication 1, dans lequel le rapport (d/D) est compris entre 1,1 et 1,3.

3. Procédé selon la revendication 1, dans lequel le diamètre externe (D) du cylindre de verre de quartz (4) est au moins de 190 nm.

4. Procédé selon la revendication 1, dans lequel l'écart entre l'élément de chauffage (3) et le cylindre de verre de quartz (4) est compris entre 15 et 25 mm.

5. Procédé selon la revendication 1, dans lequel le rapport (D/ID) du diamètre externe (D) et du diamètre interne (ID) du cylindre de verre de quartz (4) est compris entre 2 et 5.

6. Procédé selon la revendication 1, dans lequel le cylindre de verre de quartz (4) est un cylindre creux (4) comprenant un barreau de coeur qui est co-axialement inséré dans ledit cylindre creux (4) sans être intégré avec ce dernier.

7. Procédé selon la revendication 6, dans lequel le rapport (D/ID) entre le diamètre externe (D) et le diamètre interne (ID) du cylindre creux de verre de quartz (4) est compris entre 2 et 5.

8. Procédé selon la revendication 1, dans lequel le four de chauffage (2) est un four à résistance ou un four à induction.

FIG. 1

FIG. 2

FIG. 3